# EUROPÄISCHE PATENTSCHRIFT

(11) **EP 1 343 793 B1**
(45) Veröffentlichungstag und Bekanntmachung des Hinweises auf die Patenterteilung: **26.05.2004**
(21) Anmeldenummer: 01271091.9
(22) Anmeldetag: 31.10.2001
(51) Int. Cl.: C07F 7/18

(54) **VERFAHREN ZUR HERSTELLUNG VON ISOCYANATOORGANOSILANEN**
METHOD FOR PRODUCING ISOCYANATO-ORGANOSILANES
PROCEDE DE PRODUCTION D'ISOCYANATO-ORGANOSILANES

(30) Priorität: 21.12.2000 DE 10064086
(43) Veröffentlichungstag der Anmeldung: 17.09.2003
(73) Patentinhaber: Consortium für elektrochemische Industrie GmbH, 81379 München (DE)
(72) Erfinder: KAMMEL, Thomas, D-81371 München (DE); WINKLER, Rainer, D-81669 München (DE); PACHALY, Bernd, D-84561 Mehring (DE)
(74) Vertreter: Fritz, Helmut, Dr.
(86) Internationale Anmeldenummer: PCT/EP2001/012659
(87) Internationale Veröffentlichungsnummer: WO 2002/050086

(56) Entgegenhaltungen:
- EP-A- 0 064 850
- EP-A- 1 010 704
- US-A- 3 598 852
- US-A- 3 821 218
- US-A- 5 886 205
- KOZYUKOV V P ET AL: "SYNTHESIS OF CARBOFUNCTIONAL ORGANIC SILICON COMPOUNDS CONTAINING ISOCYANATE AND CHLOROFORMIATE GROUPS" JOURNAL OF GENERAL CHEMISTRY OF THE USSR, CONSULTANTS BUREAU, NEW YORK, NY, US, Bd. 38, Mai 1968 (1968-05), Seiten 1133-1138, XP001055478 ISSN: 0022-1279

## Beschreibung

Die Erfindung betrifft ein Verfahren zur Herstellung von Isocyanatoorganosilan und bestimmte Isocyanatoorganosilane.

Es besteht seit geraumer Zeit ein großes Interesse an einer wirtschaftlichen Methode zur Herstellung von Isocyanatoorganosilanen in hohen Ausbeuten und Reinheiten. Die genannten Verbindungen sind von hoher wirtschaftlicher Bedeutung, da sie beispielsweise industriell als Haftvermittler zwischen organischen Polymeren und anorganischen Materialien (sog. adhesion promoter, coupling agents, crosslinker) eingesetzt werden.

Zur Herstellung werden dabei Verfahren bevorzugt, bei denen von wenig oder gänzlich ungefährlichen Edukten ausgegangen wird, um so die Handhabung und Durchführung zu erleichtern. Bei den bisher eingesetzten Verfahren werden Isocyanatoorganosilane in relativ geringen Mengen in wenig effizienten und teuren Prozessen hergestellt.

Beispielsweise werden bei dem in US-A-6,008,396 beschriebenen Verfahren Carbamatoorganosilane in inerten heißen Medien unter Abspaltung von Alkohol in die Isocyanate umgewandelt. Dieser Prozeß kann jedoch nur semi-kontinuierlich betrieben werden, da die Konzentration an Verunreinigungen im Medium bereits nach kurzer Zeit derart ansteigt, daß die Reinheit des gewünschten Produktes signifikant abnimmt.

Bei dem in der EP-A-1010704 beschriebenen Verfahren zur Herstellung von Isocyanatoorganosilanen werden Carbamatoorganosilane thermisch in flüssiger Phase unter Katalyse von Zinn-II-chlorid zu den entsprechenden Isocyanatoorganosilanen gespalten. Nachteilig bei diesem Prozeß ist das sehr aufwendige Verfahren zur Isolierung und Reinigung der gewünschten Produkte, welches zu niedrigen Ausbeuten führt.

Deshalb wird dieses.Verfahren bis heute nicht technisch angewendet.

Die thermische Spaltung von Carbamatoorganosilanen in der Gasphase unter Normal- oder reduziertem Druck ist bekannt aus EP-A-649850. Die Ausbeuten sind jedoch unbefriedigend.

Gegenstand der Erfindung ist ein Verfahren zur Herstellung von Isocyanatoorganosilan der allgemeinen Formel 1

R²R³R⁴Si-R¹-N=C=O (1),

bei dem gasförmiges Carbamatoorganosilan der allgemeinen Formel 2

R²R³R⁴Si-R¹-NH-CO-OR (2),

wobei
R einen einwertigen C₁-C₁₀-Alkylrest,
R¹ einen zweiwertigen C₁-C₆-Kohlenwasserstoffrest und
R², R³ und R⁴ jeweils einen Methyl-, Ethyl-, n-Propyl-, i-Propyl- Methoxy-, Ethoxy-, n-Propoxy- oder i-Propoxyrest bedeuten,
in Anwesenheit eines heterogenen Katalysators auf 300-1000°C erwärmt wird.

Mit dem erfindungsgemäßen Verfahren werden hohe Ausbeuten und Selektivitäten erreicht.

Bei dem Verfahren werden aus den Carbamatoorganosilanen der allgemeinen Formel 2 Alkohole der allgemeinen Formel ROH abgespalten, insbesondere Methanol, Ethanol, Propanol, Butanol, Isobutanol, Pentanol, Hexanol, Isohexanol, Cyclohexanol und 2-Ethylhexanol. Bevorzugt sind Methanol und Ethanol, besonders bevorzugt Methanol.

Als Spacer **R**^{**1**} zwischen der Organosilylgruppe und der Carbamatogruppe können lineare oder verzweigte gesättigte oder ungesättige C₁-C₆-Kohlenwasserstoffgruppen eingesetzt werden. Bevorzugt sind Alkylreste, insbesondere lineare Alkylreste besonders bevorzugt werden Methylen, Ethylen und Propylen.

**R**^{**2**}**, R**^{**3**} und **R**^{**4**} sind vorzugsweise Methyl-, Methoxy-, Ethoxy-, n-Propoxy- oder i-Propoxyreste.

Nach dem Verfahren können erstmalig Verbindungen der allgemeinen Formel 1, bei denen
R², R³ = Methoxy, R⁴ = Methyl und R¹ = Methylen;
R² = Methoxy, R³ = Ethoxy, R⁴ = Methyl und R¹ = Methylen;
R², R³ = Ethoxy, R⁴ = Methoxy und R¹ = Methylen; oder
R², R³ = Methoxy, R⁴ = Ethoxy und R¹ = Methylen hergestellt werden. Diese Verbindungen sind ebenfalls Gegenstand der Erfindung.

Die heterogenen Katalysatoren werden bevorzugt ausgewählt aus Verbindungen von Sn(I), Sn(II), Pb(II), Zn(II), Cu(I), Cu(II), Co(I) Co(II), Mg, Ca, Ba, Cr, Mo, Ti, V, W, Ce, Ni, P, Si, Al, und Mischverbindungen und Metallen Pd, Pt, Co, Rh, Cu, Ag, Au, Zn, Cr, Mo, W, Cd und deren Mischungen und Legierungen. Katalytisch wirksam sind insbesondere Metallsalze, z. B. Acetate, Oxalate, Carbonate oder Sulfate. Bevorzugt sind Molybdän-, Vanadium-, Wolfram und Phosphor- sowie Siliciumoxide oder Mischungen bzw. Mischoxide von diesen, wie Ti₂O, Al₂O₃, BaO, CaO, MgO, CeO₂, Cr₂O₃, ZnO, V₂O₄, NiO, CuO, Co₃O₄, Fe(MoO₄)₃. Desweiteren sind Aluminosilicate, insbesondere Zeolithe in unterschiedlichen Porengrößen möglich. Auch Metallsalze in Form von Hydroxiden, Nitraten, Tartraten, Citraten, Heteropolysäuren sowie Kohlenstoffmodifikationen, z. B. Graphit, Übergangsmetallnitride sowie -carbide können eingesetzt werden.

Diese Metalle, Metallverbindungen oder deren Mischungen werden bevorzugt auf Trägermaterialien aufgebracht, z. B. auf Glaswolle, Quarzwolle, Keramiken, oxidischen Massen, wie SiO₂, Al₂O₃, Steatit. Als Trägermaterialien können bevorzugt Körper in Form von Kugeln (üblicherweise d = 3 - 20 mm), Ringen (üblicherweise d außen x h x dᵢₙₙₑₙ = 3-9 mm x 3-9 mm x 1-7 mm) , Monolithen (übliche sind z. B. l ≈ 5-20 cm, d ≈ 1-5 cm), Zylindern (üblicherweise d = 3-20 mm), Trilobs oder Pillen verwendet werden.

Das Verfahren wird bevorzugt in einem beheizten Rohr-Reaktor, in einem Schlangen- oder in einem Rohrbündelreaktor durchgeführt. Für die Herstellung dieser Geräte können die üblichen Werkstoffe wie z. B. Quarzglas oder Metalle verwendet werden.
Das gasförmige Carbamatoorganosilan der allgemeinen Formel 2 wird bevorzugt in einem Temperaturbereich von 300-600°C und insbesondere in einem Bereich von 400-500°C unter Katalyse umgesetzt.

Das Verfahren kann mit oder ohne Trägergas, z. B. Stickstoff, oder Edelgase, wie Argon durchgeführt werden.

Das Verfahren wird bevorzugt in einem Druckbereich von 0.01 - 100 bar, besonders bevorzugt bei 0.5 - 10 bar, insbesondere im Bereich von 0.5 - 1.5 bar durchgeführt.

Das Verfahren kann diskontinuierlich oder bevorzugt kontinuierlich durchgeführt werden.

Durch die hohe Produktreinheit kann das gewünschte Produkt in einem einfachen Destillationsschritt in hoher Reinheit (>97 %) gewonnen werden. Die Bildung, der bei hohen thermischen Belastungen beobachteten sechsgliedrigen Isocyanurate, wird durch das vorliegende Verfahren vermieden.

## Patentansprüche

1. Verfahren zur Herstellung von Isocyanatoorganosilan der allgemeinen Formel 1
R²R³R⁴Si-R¹-N=C=O (1),
bei dem gasförmiges Carbamatoorganosilan der allgemeinen Formel 2
R²R³R⁴Si-R¹-NH-CO-OR (2),
wobei
R einen einwertigen C₁-C₁₀-Alkylrest,
R¹ einen zweiwertigen C₁-C₆-Kohlenwasserstoffrest und R², R³ und R⁴ jeweils einen Methyl-, Ethyl-, n-Propyl-, i-Propyl- Methoxy-, Ethoxy-, n-Propoxy- oder i-Propoxyrest bedeuten,
in Anwesenheit eines heterogenen Katalysators auf 300-1000°C erwärmt wird.

2. Verfahren nach Anspruch 1, bei dem R¹ Methylen, Ethylen oder Propylen bedeutet.

3. Verfahren nach Anspruch 1 oder 2, bei dem R², R³ und R⁴ Methyl-, Methoxy- oder Ethoxyreste bedeuten.

4. Verfahren nach Anspruch 1 bis 3, bei dem die heterogenen Katalysatoren ausgewählt werden aus Verbindungen von Sn(I), Sn(II), Pb(II), Zn(II), Cu(I), Cu(II), Co(I) Co(II), Mg, Ca, Ba, Cr, Mo, Ti, V, W, Ce, Ni, P, Si, Al, und Mischverbindungen und Metallen Pd, Pt, Co, Rh, Cu, Ag, Au, Zn, Cr, Mo, W, Cd und deren Mischungen und Legierungen.

5. Verfahren nach Anspruch 1 bis 4, bei dem die Umsetzung in einem Pyrolyserohr, in einem Schlangen- oder in einem Rohrbündelreaktor durchgeführt wird.

6. Verfahren nach Anspruch 1 bis 5, welches kontinuierlich durchgeführt wird.

7. Verbindungen der allgemeinen Formel 1 gemäß Anspruch 1, bei denen
R², R³ = Methoxy, R⁴ = Methyl und R¹ = Methylen;
R² = Methoxy, R³ = Ethoxy, R⁴ = Methyl und R¹ = Methylen;
R², R³ = Ethoxy, R⁴ = Methoxy und R¹ = Methylen; oder
R², R³ = Methoxy, R⁴ = Ethoxy und R¹ = Methylen
bedeuten.

## Claims

1. Process for preparing isocyanatoorganosilanes of the general formula 1
R²R³R⁴Si-R¹-N=C=O (1),
in which gaseous carbamatoorganosilane of the general formula 2
R²R³R⁴Si-R¹-NH-CO-OR (2),
where
R is a monovalent C₁-C₁₀-alkyl radical,
R¹ is a divalent C₁-C₆ hydrocarbon radical and
R², R³ and R⁴ are in each case a methyl, ethyl, n-propyl, isopropyl, methoxy, ethoxy, n-propoxy or isopropoxy radical,
is heated to 300 - 1000°C in the presence of a heterogeneous catalyst.

2. Process according to Claim 1, in which R¹ is methylene, ethylene or propylene.

3. Process according to Claim 1 or 2, in which R², R³ and R⁴ are methyl, methoxy or ethoxy radicals.

4. Process according to Claims 1 to 3, in which the heterogeneous catalysts are selected from the group comprising compounds of Sn(I), Sn(II), Pb(II), Zn(II), Cu(I), Cu(II), Co(I), Co(II), Mg, Ca, Ba, Cr, Mo, Ti, V, W, Ce, Ni, P, Si, Al and mixed compounds and metals Pd, Pt, Co, Rh, Cu, Ag, Au, Zn, Cr, Mo, W, Cd and mixtures and alloys thereof.

5. Process according to Claims 1 to 4, in which the reaction was carried out in a pyrolysis tube, in a coiled reactor or in a tube-bundle reactor.

6. Process according to Claims 1 to 5, which is carried out continuously.

7. Compound of the general formula 1 according to Claim 1, in which
R², R³ = methoxy, R⁴ = methyl and R¹ = methylene;
R² = methoxy, R³ = ethoxy, R⁴ = methyl and R¹ = methylene;
R², R³ = ethoxy, R⁴ = methoxy and R¹ = methylene; or
R², R³ = methoxy, R⁴ = ethoxy and R¹ = methylene.

## Revendications

1. Procédé de préparation d'un isocyanato-organosilane de formule générale 1
R²R³R⁴Si-R¹-N=C=0 (1),
dans lequel on chauffe à 300-1000°C un carbamatoorganosilane gazeux de formule générale 2
R²R³R⁴Si-R¹-NH-CO-OR (2)
dans laquelle
R représente un radical alkyle en C₁-C₁₀ monovalent,
R¹ représente un radical hydrocarboné en C₁-C₆ bivalent et
R², R³ et R⁴ représentent, à chaque fois, un radical méthyle, éthyle, n-propyle, i-propyle, méthoxy, éthoxy, n-propoxy ou i-propoxy,
en présence d'un catalyseur hétérogène.

2. Procédé selon la revendication 1, dans lequel R¹ représente méthylène, éthylène ou propylène.

3. Procédé selon la revendication 1 ou 2, dans lequel R², R³, et R⁴ représentent les radicaux méthyle, méthoxy ou éthoxy.

4. Procédé selon l'une quelconque des revendications 1 à 3, dans lequel les catalyseurs hétérogènes sont selectionnés parmi des composés de Sn(I), Sn(II), Pb(II), Zn(II), Cu(I), Cu(II), Co(I), Co(II), Mg, Ca, Ba, Cr, Mo, Ti, V, W, Ce, Ni, P, Si, Al, et des composés mixtes ainsi que les métaux Pd, Pt, Co, Rh, Cu, Ag, Au, Zn, Cr, Mo, W, Cd et leurs mélanges et alliages.

5. Procédé selon l'une quelconque des revendications 1 à 4, dans lequel la réaction est effectuée dans un tube à pyrolyse, dans un réacteur à serpentin ou dans un réacteur à faisceau tubulaire.

6. Procédé selon l'une quelconque des revendications 1 à 5, qui peut être mis en oeuvre en continu.

7. Composés de formule générale 1 selon la revendication 1, dans laquelle
R², R³ = méthoxy, R⁴ = méthyle et R¹ = méthylène ;
R² = méthoxy, R³ = éthoxy, R⁴ = méthyle et R¹ = méthylène ;
R², R³ = éthoxy, R⁴ = méthoxy et R¹ = méthylène ; ou
R², R³ = méthoxy, R⁴ = éthoxy et R¹ = méthylène.
